# EUROPEAN PATENT SPECIFICATION

(11) **EP 2 224 799 B1**
(45) Date of publication and mention of the grant of the patent: **26.07.2017**
(21) Application number: 08863750.9
(22) Date of filing: 24.12.2008
(51) Int. Cl.: A01G 7/04

(54) **LIGHTING DEVICE FOR PROTECTING PLANTS FROM DISEASE**
BELEUCHTUNGSVORRICHTUNG ZUM SCHUTZ VOR PFLANZENBEFALL
DISPOSITIF D'ÉCLAIRAGE DESTINÉ À PROTÉGER DES PLANTES CONTRE UNE MALADIE

(30) Priority: 25.12.2007 JP 2007332105
(43) Date of publication of application: 08.09.2010
(73) Proprietor: Panasonic Intellectual Property Management Co., Ltd., Osaka-shi, Osaka 540-6207 (JP)
(72) Inventor: YAMADA, Makoto, Kadoma-shi Osaka 571-8686 (JP); ISIWATA, Masaki, Kadoma-shi Osaka 571-8686 (JP)
(74) Representative: Samson & Partner Patentanwälte mbB
(86) International application number: PCT/IB2008/003620
(87) International publication number: WO 2009/081272

(56) References cited:
- WO-A-2007/023237
- WO-A-2009/011349
- JP-A- 2005 328 734
- JP-A- 2007 089 430

## Description

### Technical Field

The present invention relates to a lighting device for protecting plants from disease, which includes a light source that emits light including ultraviolet rays.

### Background Art

Conventionally, there has been known a lighting device for protecting plants from disease, which emits ultraviolet rays having controlled wavelengths (see, for example, Japanese Patent Unexamined Publication No. 2005-328734). In this device, ultraviolet rays are controlled such that the wavelength components of the UV-B region (a region having wavelengths in the range of 280 to 340 nm) are included and the wavelength components of the UV-C region (a region having wavelengths in the range of 100 to 280 nm) are substantially zero. This control enables the effects of suppressing the spore formation of filamentous fungi and growth of hyphae regarding gray mold, powdery mildew, downy mildew, anthracnose and the like and preventing plant disease damages attributable thereto.

However, since this device performs control so that UV-C (having a wavelength distribution from 100 to 280 nm) becomes almost zero, it is difficult to reliably suppress the spore formation of filamentous fungi and growth of hyphae regarding the above-described diseases and reliably induce the resistance of a plant to disease damage, which making it difficult to suppress the occurrence of disease damages to the plant. Furthermore, there is no disclosure for the control of nocturnal insects such as owlet moths.

Furthermore, there has been known a lighting device for cultivating plants which radiates light including ultraviolet rays and visible rays (blue, yellow and red rays) and enables the cultivation of plants (see, for example, Japanese Patent Unexamined Publication No. 2001-28947). However, according to this device, the radiation of light including ultraviolet rays (having a wavelength distribution from 250 to 375 nm) and visible rays (blue, yellow and red light) enables the cultivation of plants, but causes a reduction in the suppression of disease damages to plants because the wavelength distribution of ultraviolet rays includes UV-A (a region having wavelengths of about 390-380 nm) that promotes the spore formation of filamentous fungi and has the effect of luring insects. Furthermore, according to this device, the efficiency of the control of insect diseases is low because blue light lures insects, and effective radiation for the prevention of diseases by nocturnal insects is not performed because there is no disclosure for the control of nocturnal insects such as owlet moths.

Furthermore, depending on the extent of the radiation of light corresponding to the absorption spectra of phytochrome, included in the yellow component and red component of visible rays, onto a plant, there may be influence on the formation of flower buds of the plant.

JP 2005-328734 discloses a lighting device according to the features of the preamble of claim 1.

### Disclosure of Invention

While the invention is defined in the independent claim, further aspects of the invention are set forth in the dependent claim, the drawings and the following description.

In view of the above, the present invention provides a lighting device for protecting plants from diseases, which is capable of reliably suppressing the formation of filamentous fungi and growth of hyphae regarding gray mold, powdery mildew and the like, suppressing the occurrence of disease damage to a plant by reliably inducing the resistance of the plant to disease damage, suppressing the influence of light on the formation of flower buds of the plant, and reducing damage attributable to nocturnal insects.

In accordance with an aspect of the present invention, there is provided a lighting device for protecting plants from disease , which includes a light source for emitting light including ultraviolet rays, wherein the light source radiates UV-B having wavelength components in the range of about 280-340 nm, UV-C having wavelength components in the range of about 100-280 nm from which wavelength components equal -- to or lower than about 255 nm have been removed, and visible rays having a peak among wavelength components having a wavelength distribution from 460 to 550 nm at least in an overlapping manner.

The sum of the irradiance of UV-C and the irradiance of UV-B at a location where UV-C and UV-B come into contact with a plant is equal to or lower than about 50 µW/cm<2>, and the irradiance of the visible rays at a location where the visible rays come into contact with the plant is equal to or higher than about 0.2 µW/cm².

Further, the ratio of the radiation of UV-C to the radiation of UV-B may be about 0.04-0.1:1.

### Advantageous Effects

In according with the present invention, UV-C from which wavelengths equal to or lower than about 255 nm have been removed, UV-B having wavelength components in the range of about 280-340 nm, and visible rays favorable for the light absorption of chlorophyll and having a wavelength distribution overlapping the wavelength distribution of the luminous efficacy characteristic of nocturnal insects are radiated in an overlapping manner. Accordingly, the spore formation of filamentous fungi and growth of hyphae regarding gray mold, powdery mildew and the like can be further reliably suppressed, the resistance of a plant to disease damage can be further reliably induced, the occurrence of disease damage and growth disorder can be suppressed, the metabolism of a plant can be promoted, and damage attributable to nocturnal insects such as owlet moths can be reduced. Furthermore, since light corresponding to the absorption spectra of phytochrome is hardly radiated, there is little influence on the formation of flower buds of a plant.

Furthermore, the sum of the irradiance of UV-C and the irradiance of UV-B is equal to or lower than about 50 µW/cm², so that the intensity of ultraviolet rays is not excessively high and UV-C and UV-B can be appropriately radiated onto a plant. Accordingly, the growth disorder of a plant such as leaf scorch can be suppressed, and the occurrence of plant diseases can be suppressed. Furthermore, the irradiance of the visible rays is equal to or higher than about 0.2 µW/cm², so that the metabolism of a plant can be easily promoted and the effect of reducing damage attributable to nocturnal insects such as owlet moths can be further increased.

Moreover, by setting the ratio of the radiation of UV-C to the radiation of UV-B to be about 0.04-0.1:1, the proportion of UV-B is increased, so that growth disorder such as leaf scorch can be further suppressed.

### Brief Description of Drawings

The objects and features of the present invention will become apparent from the following description of embodiments, given in conjunction with the accompanying drawings, in which:
Fig. 1 is a diagram showing the construction of a lighting device for protecting plants from disease in accordance with an embodiment of the present invention;
Fig. 2 is a diagram showing the spectral power distribution of a tanning lamp that is used as a light source of the lighting device;
Fig. 3 is a diagram showing another example of the arrangement of the light sources of the lighting device;
Fig. 4 is a diagram showing still another example of the arrangement of the light sources of the lighting device;
Fig. 5 is a diagram showing the relationships between the spectra of the green fluorescent lamp of the lighting device, the luminous efficacy characteristic of owlet moths and the absorption spectra of phytochrome; and
Fig. 6 is a partial sectional view of a fluorescent lamp that is used as the light source.

### Best Mode for Carrying Out the Invention

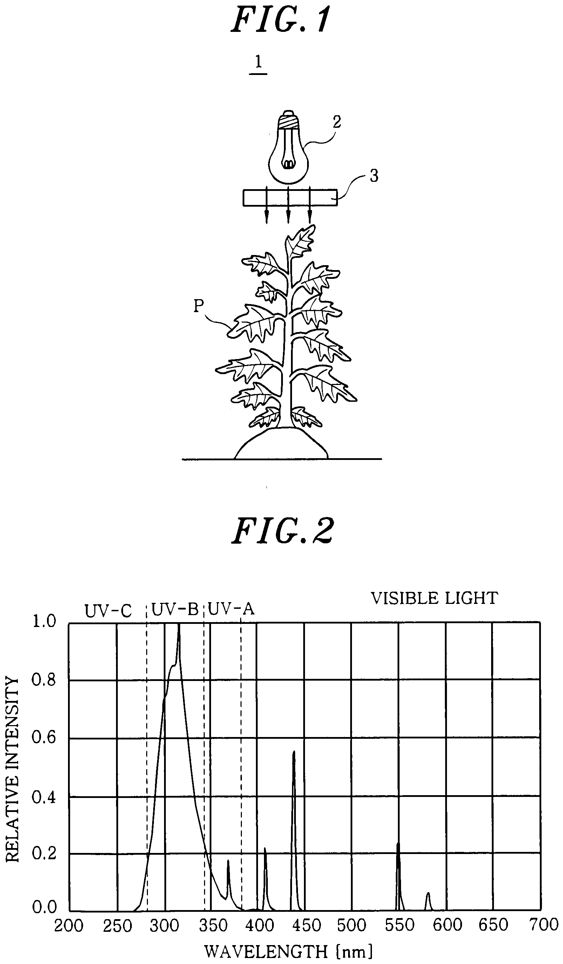

Hereinafter, a lighting device for protecting plants from disease in accordance with embodiments of the present invention will be described with reference to Figs. 1 to 6. This lighting device for protecting plants from disease (hereinafter referred to as "lighting device") is a device for controlling not only plant diseases attributable to filamentous fungi (fungi) regarding gray mold, sclerotium disease, early blight, leaf spot disease, powdery mildew, downy mildew, anthracnose, and the like appearing during the cultivation of the seedlings of vegetables or flowers but also nocturnal insects (such as owlet moths) in indoor cultivation in a completely closed plant seedling production system, an agricultural vinyl or glass house or the like, in outdoor cultivation or the like.

Fig. 1 shows the construction of a lighting device 1 in accordance with a first embodiment of the present invention. This lighting device 1 includes a light source 2 for emitting light including ultraviolet rays and a filter 3 for performing the wavelength control of the light emitted from the light source 2. The light having passed through this filter 3 is radiated onto a plant P. The light source 2 radiates UV-B having wavelength components in the range of about 280-340 nm, UV-C having wavelength components in the range of about 100-280 nm from which wavelengths of about 255 nm or less have been removed, and visible rays having a peak among wavelength components having a wavelength distribution from 460 to 550 nm onto the plant P at least in an overlapping manner. The light radiated from the light source is controlled such that the sum of the irradiance of UV-C and the irradiance of UV-B at a location of contact with the plant P is equal to or lower than about 50 µW/cm² and the irradiance of the UV-C is lower than the irradiance of UV-B. Furthermore, the visible rays are controlled such that irradiance of the visible rays is equal to or higher than about 0.2 µW/cm2.

The light source 2 is not limited to a specific light source as long as it emits light including UV-C from which wavelength components equal to or lower than 255 nm have been removed, UV-B and visible rays (having a wavelength distribution from 460 to 550 nm). For example, it may be possible to combine ultraviolet light emitted from a light source (hereinafter referred to as "UV light source") that generates UV-C from which wavelength components equal to or lower than 255 nm have been removed and UV-B, and visible rays emitted from a light source (hereinafter referred to as "visual light source") that generates a wavelength distribution from 460 to 550 nm.

The UV light source includes, for example, a fluorescent lamp such as a tanning lamp having a spectral distribution shown in Fig. 2 (Product No. GL 20E manufactured by Sankyo Denki Co., Ltd.). This tanning lamp emits UV-C from which wavelength components equal to or lower than 255 nm have been removed and UV-B.

Furthermore, the UV light source may include a mercury lamp or metal halide lamp (Sky Beam manufactured by Matsushita Electric Industrial Co., Ltd.) having many ultraviolet ray components in the range of about 255-380 nm or a High Intensity Discharged (HID) lamp such as a xenon lamp having continuous spectra in the ultraviolet region. The UV light source is not limited to a specific light source as long as it emits UV-C from which wavelength components equal to or lower than about 255 nm have been removed and UV-B.

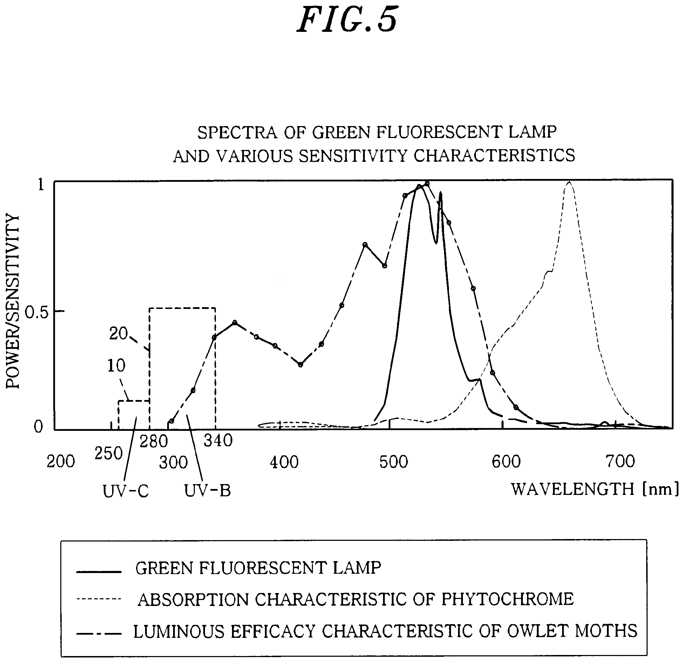

The metal halide lamp, a mercury lamp or a color HID lamp may be used as a visible light source. Visible rays (having a wavelength distribution from 460 to 550 nm) can be obtained by passing the light of the various types of lamps through the filter 3. Furthermore, such a visible light source may be combined with a different visible light source. For example, the combination of a green LED and a green fluorescent lamp (refer to Fig. 5) having a peak among wavelength components of a wavelength distribution from 460 to 550 nm is effective.

Here, as a control unit for performing control so that the sum of the irradiance of UV-C and the irradiance of UV-B at the location of contact with a plant is about 50 µW/cm² and the irradiance of visible rays at the location of contact with a plant is equal to or higher than about 0.2 µW/cm², for example, a light controller (not shown) that is capable of controlling the radiation of light is provided. The light source 2 is electrically controlled by the light controller, so that the sum of the irradiance of UV-C and the irradiance of UV-B is equal to or lower than 50 µW/cm² and the irradiance of visible rays is equal to or higher than 0.2 µW/cm². The control unit is not limited to the light controller. For example, the irradiance of UV-C, the irradiance of UV-B and the irradiance of visible rays may be controlled by using the filter 3, a coated film or deposited film formed on the lamp of the light source 2, or a combination thereof.

The filter 3 is made of glass or resin, and configured not to transmit most of the UV-A of light emitted from the light source 2, that is, light having wavelengths of about 340-380 nm. As a result, wavelength components in the range of about 340-380 nm are removed from the light radiated onto the plant P by the filter 3, and become almost zero. The filter 3 is effective in the case where a metal halide lamp or a xenon lamp having a high luminous flux and many wavelength components in the ultraviolet region in the range of about 300-400 nm is used as the light source 2.

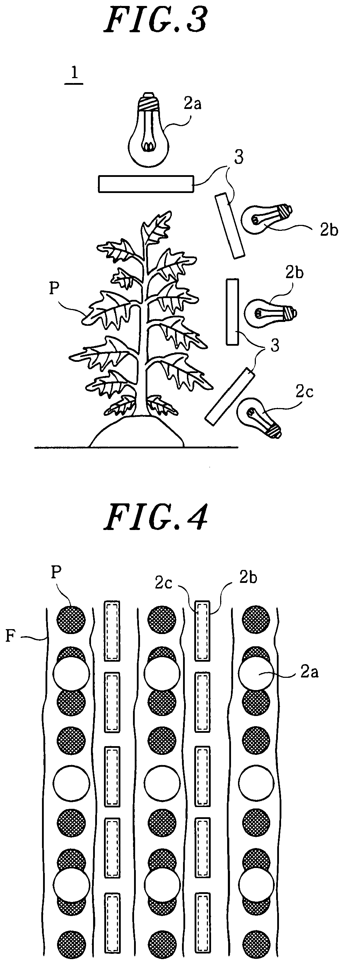

Although the light source 2 and the filter 3 are located above the plant P so as to radiate light above the plant P, the location thereof is not limited thereto. However, when plants P are set relatively close together and cultivated, the light source 2 at a location above the plants P cannot radiate sufficient light onto the side and lower parts of adjacent plants P due to the shadows of the plants P, so that the side and lower parts of the plants P may be vulnerable to diseases. Accordingly, in this case, as shown in Fig. 3, it is preferable to install the light sources 2 and the filters 3 above the plants P, on a side of the plants P and beside the lower part of the plant P. Hereinafter, light sources 2 located above, on a side of and beside a lower part of a plant P and configured to radiate the upper, sides, and lower parts of the plant P are respectively referred to as "upper light source 2a", "side light source 2b and "lower light source 2c". Although in Fig. 3, one upper light source, two side light sources 2b and one lower light source 2c are illustrated, the numbers of them are not limited thereto.

In the case where a plurality of plants P is arranged along ridges F as shown in Fig. 4, it is preferable to provide a plurality of upper light sources 2a, side light sources 2b and lower light sources 2c. The upper light sources 2a are installed along the ridges F at predetermined intervals. The side light sources 2b and the lower light sources 2c are installed almost parallel to the ridges F, that is, they are substantially consecutively installed almost parallel to the line of the plants P. The side light sources 2b and the lower light sources 2c are constructed with, for example, fluorescent lamps waterproofed with cylinders or the like, and are installed almost parallel to the ridges F. The side light sources 2b and the lower light sources 2c may be constructed with hollow light guide-type illumination devices, optical fiber, elongate EL devices or the like. As described above, the upper light sources 2a, the side light sources 2b and the lower light sources 2c are installed parallel to each other, so that they can reliably radiate light onto the sides and lower parts of plants P even in the case where the plants P are arranged in an area wider than the range of light radiation each of the light sources.

The period during which light is radiated from the light sources 2 onto the plants P is controlled by for example, a timer. Accordingly, power supply to the light sources 2 is allowed or cut off at the times set by the timer, thereby turning on or off the light sources 2. Furthermore, the light distribution and light quantity of the light sources 2 may be adjusted to be suitable for the growth of the plants P. For example, in the case where in the early growth stage, plants P have not been grown well and are small, the upper light sources 2a are turned off, the side light sources 2b and the lower light sources 2c are turned on, and the angles of installation of the side light sources 2b and lower light sources 2c are adjusted, thereby restricting the width of the distribution of light and reducing the quantity of light that are radiated onto the plants P. As the plants P become larger, the upper light sources 2a are also turned on and the angles of installation of the side light sources 2b and lower light sources 2c are adjusted, thereby widening the distribution of light and increasing the quantity of light that is radiated onto the plants P. Meanwhile, a method of adjusting the light distribution and the light quantity of the side light sources 2b and lower light sources 2c is not limited to the above-described example. In the case where the light quantity of the upper light sources 2a is small or the plants P require a relatively large quantity of light, the upper light sources 2a may be turned on even in the early growth stage.

In order to ensure the effect of controlling plant diseases and insects, it is preferable to install the lighting device 1 inside, for example, an agricultural vinyl house or glass house (hereinafter referred to as "house") capable of blocking the UV-A of-solar light. When the lighting device 1 is used inside the house, not only the UV-A of the light radiated onto the plants P from the lighting device 1 but also the UV-A of the light radiated onto the plants P from the sun can be blocked, so that filamentous fungi can be effectively controlled.

If the intensities of UV-C from which wavelength components equal to or lower than about 255 nm have been removed and UV-B are high, UV-C and UV-B may damage a human body, for example, the eyes or skin. For this reason, it is preferable to install a light shielding plate or a human detection sensor switch inside the house, electrically connect it to the lighting device 1, thereby controlling the distribution of light so that the light of the light sources 2 is not radiated onto a worker or controlling the light sources 2 to be turned on only when a worker is not present inside the house. Through this control, it is possible to ensure the safety of a worker inside the house.

Fig. 5 shows an example of radiation spectra (indicated by a solid line) that are the spectral radiation characteristic of green fluorescent lamps when the green fluorescent lamps are used as the visible light sources of the light source 2, an example of absorption spectra (indicated by a broken line) that are the light absorption characteristic of phytochrome, and an example of a luminous efficacy characteristic (indicated by a dotted dashed line) that is the spectral sensitivity of owlet moths on respective graphs. The vertical axes of the graphs are normalized with the maximum power levels of emission and absorption spectra set to 1 and the maximum sensitivity of the luminous efficacy characteristic set to 1. Furthermore, regions 10 and 20 surrounded by dotted lines indicate UV-C from which wavelength components equal to or lower than about 255 nm have been removed and UV-B, respectively.

The example of the spectral radiation characteristic of the spectra of the green fluorescent lamp includes a visible ray that has a peak among wavelength components having a wavelength distribution from about 460 to 550 nm. The absorption spectra of phytochrome, which were discovered by Butler et al. (Butler, W. L.: Photochem, Photobiol. 3, pp.521-528, 1964), have a peak near 660 nm, and has higher levels in the range of 560-700 nm (from the red color to the yellow color). It is known that when light corresponding to the absorption spectra of phytochrome is radiated onto a plant, the radiation of light exerts a bad influence on the formation of flower buds of the plant. Furthermore, with regard to the luminous efficacy characteristic of owlet moths, it is known that in order to achieve the effect of suppressing the activity of owlet moths, it is preferable to use light sources having the peak of spectral radiation energy in a wavelength region from 460 to 580 nm, as disclosed by Uchidara (annual conference of the Illumination Engineering Institute of Japan, August 2003).

The spectra of the green fluorescent lamp correspond to visible rays that have a peak between 460-560 nm in a range from the upper limit of the luminous efficacy characteristic of owlet moths to the lower limit of the absorption spectra of phytochrome, and that have a wavelength distribution which overlaps the spectral distribution of the luminous efficacy characteristic of owlet moths and hardly overlaps the absorption spectra of phytochrome. Accordingly, when the spectra of the green fluorescent lamp are radiated, the metabolism of a plant is promoted because the light absorption of chlorophyll is high, damage attributable to leaf scorch is reduced and a bad influence on the formation of flower buds of a plant is reduced because the resistance of the plant to ultraviolet light is promoted, and it is possible to efficiently control nocturnal insects.

The following Table 1 shows test results when ultraviolet rays and visible rays were radiated onto strawberries. This table shows plant disease occurrence rate (%), plant growth disorder (leaf scorch rate (%)), and owlet moth damage rate (%) that were obtained using the sum of the irradiances of UV-C and UV-B at a location where they come into contact with strawberries (plants) (which is referred to as "ultraviolet ray output") and the irradiance of visible rays at a location where the visible rays come into contact with strawberries (plants) (which is referred to as "visible ray output") as parameters.

**Table 1**

| Example of test results of radiation of ultra violet and visible rays onto strawberries | | | | |
|---|---|---|---|---|
| Ultraviolet ray output (µW/cm²) | Visible ray output (µW/cm²) | Disease occurrence rate (%) | Growth disorder (leaf scorch (%)) | Owlet moth damage rate (%) |
| 55 | 0.2 | 3.8 | 33.2 | 2.68 |
| 50 | 0.2 | 3.6 | 0 | 2.76 |
| 0 | 0.2 | 75 | 0 | 4.78 |
| 55 | 0.15 | 4.9 | 41.7 | 9.02 |
| 50 | 0.15 | 4.2 | 3.5 | 11.3 |
| 55 | 0.1 | 6.8 | 63.9 | 12.4 |
| 50 | 0.1 | 7.3 | 15.6 | 11.9 |
| 50 | 0 | 5.1 | 100 | 59.3 |
| 55 | 0 | 5.7 | 100 | 67.2 |

As shown in Table 1, in the case where the visible ray output was 0.2 µW/cm², the leaf scorch rate was 33.20, which was high, when the ultraviolet ray output was 55 µW/cm² and the disease damage occurrence rate was 75%, which was very high, when the ultraviolet ray output was 0 (µW/cm². In contrast, it can be seen that in the case where the ultraviolet ray output was 50 µW/cm², the disease occurrence rate was 3.6%, the leaf scorch rate was 0%, and the owlet moth damage rate was 2.76%, which were all very low. Meanwhile, in the case where the visible ray output was lower than 0.2 µW/cm², that is, the visible ray output was 0 µW/cm², 0.1 µW/cm² and 0.15 µW/cm², the disease occurrence rate, the leaf scorch rate and the owlet moth damage rate were all deteriorated and the effects of the illumination were low. That is, by setting the ultraviolet ray output to a value equal to or lower than 50 µW/cm² while setting the visible ray output to a value equal to or higher than 0.2 µW/cm², the disease occurrence rate, the growth disorder (leaf scorch rate) and the owlet moth damage rate could be desirably suppressed compared to the cases where the visible ray output and the ultraviolet ray output were set to different parameters. Furthermore, in Table 1, the ratio of the radiation of UV-C to the radiation of UV-B was measured to be about 0.1:1.

As indicated by the above-described test results, according to the present embodiment, ultraviolet rays in an about 255-280 nm UV-C and UV-B wavelength region are radiated onto the plants, the spore formation of filamentous fungi and growth of hyphae regarding gray mold, powdery mildew, downy mildew, anthracnose and the like can be reliably suppressed, the resistance of the plants to disease damage can be reliably induced, the occurrence of disease damage can be suppressed, and the growth disorder of the plant can be prevented. Furthermore, 460-550 nm visible rays that can be strongly absorbed by chlorophyll and has a high luminous efficacy for nocturnal insects are radiated in an overlapping manner, so that the metabolism of plants, the influence of light on the formation of flower buds of plants is suppressed, and nocturnal insects can be efficiently controlled.

In particular, the output of ultraviolet rays corresponding to the sum of the irradiance of UV-C and the irradiance of UV-B at the position of contact with a plant is adjusted to a value equal to or lower than 50 µW/cm², UV-C and UV-B can be appropriately radiated onto plants, plant growth disorder such as leaf scorch can be prevented, and the occurrence of disease damage can be strongly suppressed. Furthermore, the output of visible rays at a location where the visible rays are radiated on a plant is adjusted to a value equal to or higher than about 0.2 µW/cm², the metabolism of the plant can be easily promoted and the effect of controlling nocturnal insects such as owlet moths can be efficiently increased.

Furthermore, according to the present embodiment, ultraviolet rays radiated onto plants have substantially no wavelength component in the UV-A region which promotes the formation of the spores of filamentous fungi, so that the expansion of plant disease damage can be suppressed by effectively suppressing the spore formation of filamentous fungi or the growth of hyphae, thus resulting in the increase in the yield of crops. Furthermore, since light including UV-A has the effect of luring insects, in the present embodiment, by removing UV-A, the effect of luring insects can be suppressed and damage attributable to harmful insects can be reduced.

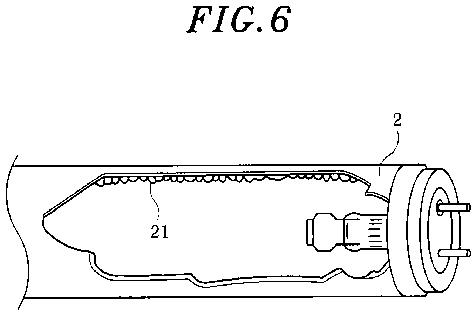

Meanwhile, when the light source 2 is formed of a fluorescent lamp, the filter 3 need not be provided, and a fluorescent substance 21 applied to the inside of the fluorescent tube of the fluorescent lamp, as shown in Fig. 6, may have the characteristic of radiating light in which wavelength components equal to or lower than about 255 nm in the UV-C region and wavelength components in the UV-A region (a region having wavelengths ranging from about 340 to 380 nm) are almost zero. In this fluorescent lamp, electrons are emitted through electric discharge, ultraviolet rays are emitted through the reception of the electron energy by mercury atoms, the ultraviolet rays are absorbed by the fluorescent substance 21, and the fluorescent substance 21 radiates light.

Furthermore, the light source 2 is not limited to a specific light source, and light having wavelengths equal to or lower than about 255 nm may be removed by using, as the filter 3, a filter that does not transmit most of light having wavelengths equal to or lower than 255 nm. This filter 3 is effective in the case where the metal halide lamp or xenon lamp having a relatively high luminous flux and including wavelength components in the ultraviolet rays region equal to or lower than about 255 nm is used as the light source 2.

Next, a lighting device 1 in accordance with a second embodiment of the present invention will be described below. The illustration of the lighting device 1 according to the present embodiment will be omitted here. The lighting device 1 according to the present embodiment is different from that of the first embodiment in that light radiated from a light source is adapted such that the ratio of the radiation of UV-C to the radiation of UV-B at a location where they come into contact with a plant P is about 0.04-0.1:1.

A control unit for adjusting the ratio of the radiation of UV-C to the radiation of UV-B to about 0.04-0.1:1 is constructed with, for example, a light controller capable of controlling the illumination of the light. The light source is electrically controlled by the light controller, so that the radiation ratio becomes about 0.04-0.1:1.

The following Table 2 shows radiation test results for strawberries in the case where the ratio of the radiation of UV-C to the radiation of UV-B varies. This table shows radiation test results regarding the disease occurrence rate (%) and the growth disorder (the leaf scorch rate (%)) in the case where the ratio of the radiation of UV-C to the radiation of UV-B at a location where they come into contact with a strawberry (a plant) varies in such a way that UV-B is set to 1 and UV-C varies from 0 to 0.12 as a parameter. Furthermore, the output of visible rays is constantly maintained at 0.2 µW/cm², and the output of ultraviolet rays corresponding to the sum of the irradiance of UV-C and the irradiance of UV-B is constantly maintained at 50 µW/cm².

**Table 2**

| Example of radiation test results for strawberries in the case where the ratio of the radiation of UV-C to the radiation of UV-B varies | | | |
|---|---|---|---|
| UV-C proportion | UV-B proportion | Disease occurrence rate (%) | Growth disorder (leaf scorch rate (%)) |
| 0 | 1 | 8.2 | 0 |
| 0.01 | | 8.1 | 0 |
| 0.02 | | 6.8 | 0 |
| 0.03 | | 7.5 | 0 |
| 0.04 | | 2.5 | 0 |
| 0.06 | | 2.4 | 0 |
| 0.08 | | 3.1 | 0 |
| 0.09 | | 1.7 | 0 |
| 0.1 | | 1.9 | 0 |
| 0.11 | | 1.8 | 5.5 |
| 0.12 | | 2 | 12.5 |

As indicated in Table 2, there could be obtained very favorable radiation test results in which, when the ratio of the radiation of UV-C to the radiation of UV-B was 0.04-0.1:1, the disease occurrence rate was 1.9-2.5% and the leaf scorch rate corresponding to the growth disorder was 0%. In particular, the disease occurrence rate 1.9-2.5% is more favorable than the lowest disease occurrence rate 3.6% in Table 1 of the first embodiment, and in the overall range of 0.04-0.1:1, the leaf scorch rate corresponding to the growth disorder was 0%.

As indicated by the above test results, in accordance with the lighting device for controlling plant diseases and insects according to the second embodiment, the ratio of the radiation of UV-C to the radiation of UV-B is adjusted to about 0.04-0.1:1, so that the growth disorder of a plant, such as leaf scorch, can be reliably suppressed and the disease occurrence rate can be further reduced.

Meanwhile, the present invention is not limited to the above-described embodiments, but may be modified in various manners according to the purposes thereof. For example, it is possible to provide one or more illuminance sensors capable of detecting illuminance near a plant, detect visible rays and/or ultraviolet rays using these illuminance sensors and control the turning on and off of one or more light sources according to detection signals.

## Claims

1. A lighting device (1) for protecting plants from disease, which includes a light source (2) for emitting light including ultraviolet rays,
**characterized in that**
the light source radiates UV-B having wavelength components in a range of about 280-340 nm, UV-C having wavelength components in a range of about 100-280 nm from which wavelength components equal to or lower than about 255 nm have been removed, and visible rays having a peak among wavelength components having a wavelength distribution from 460 to 550 nm at least in an overlapping manner, **characterised in that** the sum of irradiance of the UV-C and irradiance of the UV-B at a location where the UV-C and the UV-B come into contact with a plant is equal to or lower than about 50 µW/cm², and irradiance of the visible rays at a location where the visible rays come into contact with the plant is equal to or higher than about 0.2 µW/cm².

2. The lighting device (1) as set forth in claim 1, wherein a ratio of radiation of the UV-C to radiation of the UV-B is about 0.04-0.1:1.

## Patentansprüche

1. Beleuchtungsvorrichtung (1) zum Schutz vor Pflanzenbefall, die eine Lichtquelle (2) enthält, zum Emittieren von Licht, das ultraviolette Strahlen enthält,
**dadurch gekennzeichnet, dass**
die Lichtquelle UV-B ausstrahlt, die Wellenlängenkomponenten in einem Bereich von 280 - 340 nm aufweist, UV-C ausstrahlt, die Wellenlängenkomponenten in einem Bereich von 100 - 280 nm aufweist, wovon Wellenlängenkomponenten gleich oder kleiner als 255 nm entfernt worden sind, und sichtbare Strahlen ausstrahlt, die einen Peak um Wellenlängenkomponenten aufweisen, die eine Wellenlängenverteilung von 460 bis 550 nm zumindest in einer überlappenden Art aufweisen, **dadurch gekennzeichnet, dass**
die Summe der Bestrahlungsstärke der UV-C und der Bestrahlungsstärke der UV-B an einem Ort wo die UV-C und die UV-B mit einer Pflanze in Kontakt kommen, gleich oder weniger als ungefähr 50 µW/cm² ist, und eine Bestrahlungsstärke der sichtbaren Strahlen an einem Ort, wo die sichtbaren Strahlen mit der Pflanze in Kontakt kommen gleich oder mehr als 0,2 µW/cm² ist.

2. Beleuchtungsvorrichtung (1) nach Anspruch 1, bei der ein Verhältnis von Strahlung der UV-C zu Strahlung der UV-B ungefähr 0,04-0,1:1 ist.

## Revendications

1. Dispositif d'éclairage (1) destiné à protéger des plantes contre une maladie, lequel dispositif inclut une source de lumière (2) pour émettre une lumière qui inclut des rayons ultraviolets,
**caractérisé en ce que** :
la source de lumière rayonne des UV-B qui ont des composantes de longueur d'onde dans une plage d'environ 280-340 nm, des UV-C qui ont des composantes de longueur d'onde dans une plage d'environ 100-280 nm de laquelle des composantes de longueur d'onde égales ou inférieures à environ 255 nm ont été enlevées, et des rayons visibles qui ont une crête parmi des composantes de longueur d'onde qui présentent une distribution de longueurs d'onde de 460 à 550 nm au moins d'une manière en chevauchement,
caractérisé en ce qui :
la somme de l'éclairement énergétique des UV-C et de l'éclairement énergétique des UV-B en un emplacement au niveau duquel les UV-C et les UV-B viennent en contact avec une plante est égale ou inférieure à environ 50 µW/cm², et l'éclairement énergétique des rayons visibles en un emplacement au niveau duquel les rayons visibles viennent en contact avec la plante est égal ou supérieur à environ 0,2 µW/cm².

2. Dispositif d'éclairage (1) selon la revendication 1, dans lequel un rapport du rayonnement des UV-C sur le rayonnement des UV-B est d'environ 0,04-0,1/1.
